# EUROPEAN PATENT APPLICATION

(11) **EP 1 020 999 A1**
(43) Date of publication of application: **19.07.2000**
(21) Application number: 98403231.8
(22) Date of filing: 18.12.1998
(51) Int. Cl.: H04B 7/005

(54) **Mobile communication system with compressed mode operation and method of operating the same**

(71) Applicant: Nortel Matra Cellular, 78928 Guyancourt Cédex 9 (FR)
(72) Inventor: Lucidarme, Thierry, 78180 Montigny le Bretonneux (FR); Vincent, Paul, 92500 Rueil-Malmaison (FR); Lescuyer, Pierre, 78180 Montigny le Bretonneux (FR)
(74) Representative: Bird, William Edward

(57) **Abstract**

A method and a telecommunications system supporting compressed mode operation is described in which this type of operation is used more frequently than previously known. To compensate for the reduction in reception quality caused by the interruptions to transmissions, the transmitted power may be increased. To prevent an unacceptable increase in interference, the timing and position in the frame of punctured slots is co-ordinated by the network.

A transmitter (30) is described which includes a frame processor 37 controlled by a central processor (40). The central processor (40) also controls the power of a transmit power amplifier (45) and has sufficient intelligence to specify the optimum timing and position in a frame of a punctured slot to the frame processor (37) and to control the power amplifier (45) to increase the transmission power in that frame.

## Description

The present invention relates to a telecommunication system and a method of operating it as well as a transmitter and a method of operating it, in which a slotted or compressed mode operation allows remote receivers to carry out various tasks.

### TECHNICAL BACKGROUND

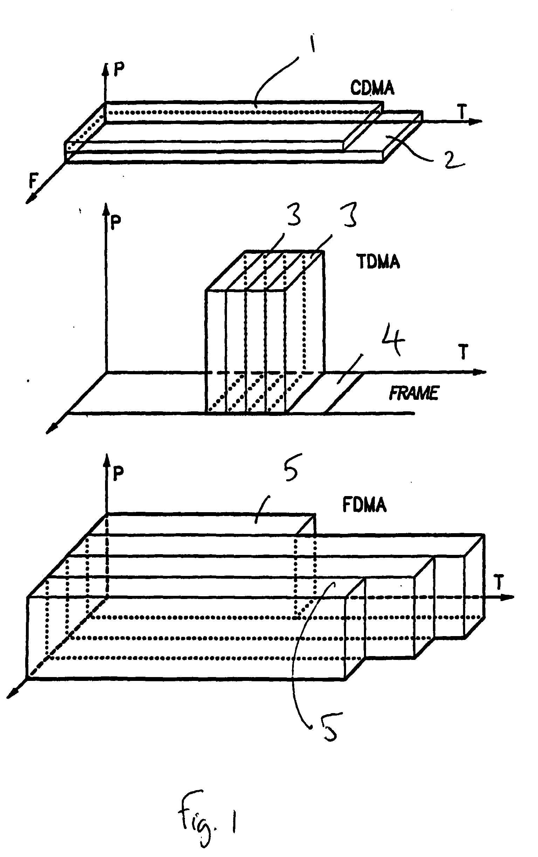

A variety of multiple access methods are known for mobile telecommunication systems of which three are shown schematically in Fig. 1. The graphs in Fig. 1 have transmitted power as vertical axis, time as the horizontal axis and frequency as the third axis. A first type of system uses spread spectrum techniques such as for instance code divisional multiple axis (CDMA) as is known from the US standard IS95. In order to maintain orthogonality between users, each user transmission 1, 2 is coded with a unique orthogonal code and transmitted at the same time and within the same frequency band as all other transmissions. In an alternative system the isolation (sometimes called orthogonality) between user transmissions may be obtained by transmitting the different user transmissions at different times. For example, in the time division multiple access method (TDMA) transmission times are broken up into a series of individual time slots 3 and a particular user may be assigned a particular time slot. The time slots 3 may be organised in frames 4 which repeat at regular intervals and these frames may again be organised in a hierarchical system of larger frames as is known for instance from the GSM system used in Europe and specified in the ETSI specifications relating thereto. Finally another system of multiple access relies on maintaining orthogonality between user transmissions by assigning a particular frequency or frequency band to a particular user. In the frequency division multiple access (FDMA) scheme individual users obtain a frequency band 5 which is different from the frequency band of other users.

Any two of CDMA, TDMA and FDMA may be combined together so that for instance an FDMA/TDMA system may be provided in which a user is given a certain time slot 3 within a certain frequency band 5. Alternatively in a CDMA/FDMA system a user transmission may be given a certain code 1, 2 within a certain frequency band 5. Further, all three methods may be combined. For example, a user may be given a certain time slot 3 within a frame and the frequency of transmission may be varied in accordance with a frequency hopping sequence so that the signal is not associated with a single frequency but the spectrum of the signal is spread in frequency by hopping between frequencies. Alternatively, the signal may be spread by means of a code 1, 2 in accordance with the CDMA system and may be transmitted within a certain time slot 3 within a frame in TDMA within a certain frequency band 5 in FDMA.

As shown schematically in Fig. 1 in FDMA and CDMA systems each transmission is usually continuous. If a mobile station wishes to monitor a frequency other than the one on which it is currently receiving, either the signal from the transmitter serving the mobile station must be interrupted while the mobile station changes its receiver characteristics and monitors for radio sources with a different frequency or the mobile station must be equipped with two different receivers able to receive two different frequencies at the same time. Providing two different receivers usually increases the cost of the mobile station unacceptably. Therefore, systems have been designed which allow the formation of gaps or slots in the continuous transmission of an FDMA or CDMA system so that a mobile terminal may monitor transmissions at other frequencies, for instance, from other radio sources, e.g. from other base stations in the same system or in other systems.

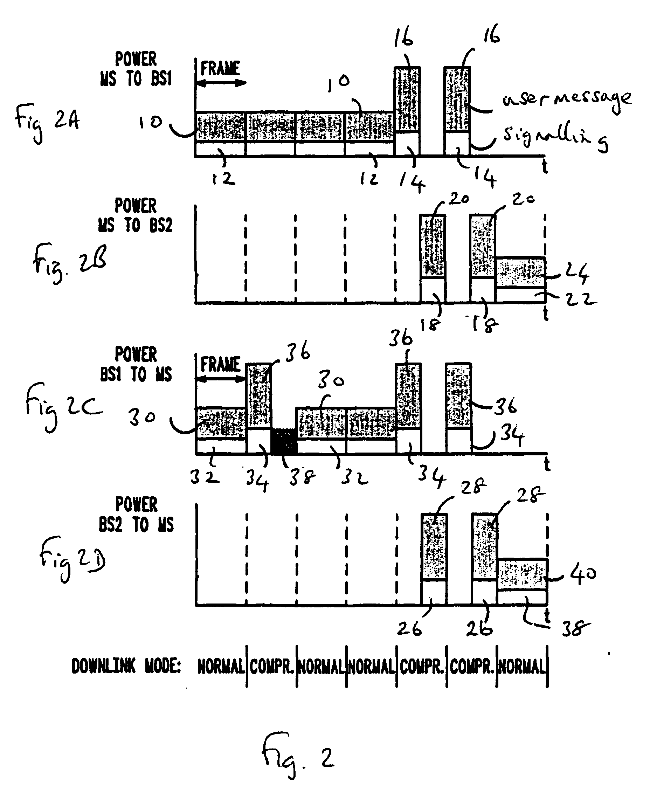

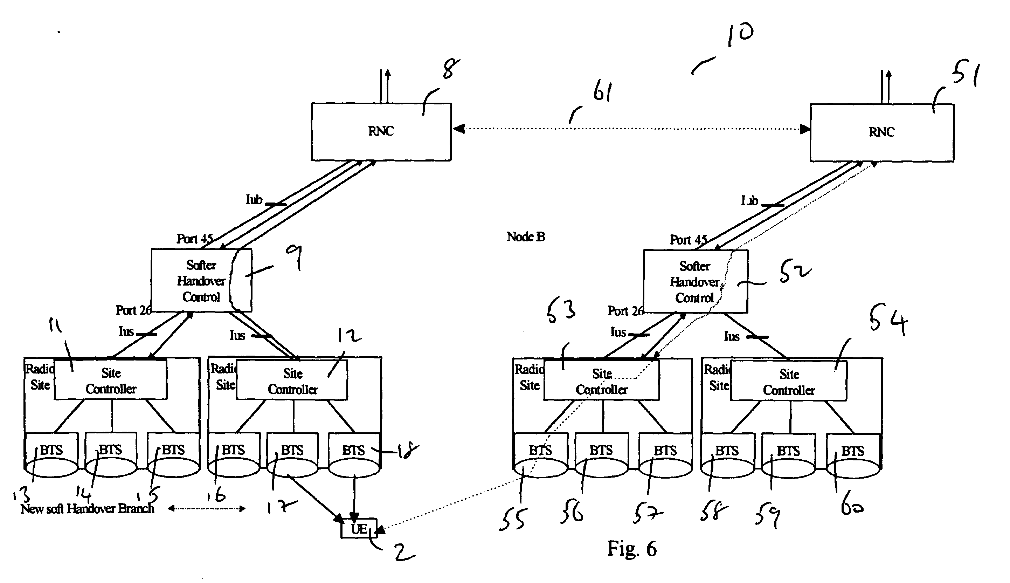

One such method of providing a slot for monitoring purposes in a CDMA based system is described in the article by Alfred Baier, Uwe-Carsten Fiebig, Wolfgang Granzow, Wolfgang Koch, Paul Teder and Jörn Thielicke, "Design study for a CDMA based second generation of a mobile radio system", IEEE Journal on Selected Areas in Communications, vol. 12, No. 4, May 1994, Pages 733 to 741. This known system is shown schematically in Fig. 2 which is based on Fig. 6 of the above mentioned article. Each of the graphs Fig. 2a to 2d has the transmitting power of the mobile station (MS) or relevant base station (BS1, BS2) as the vertical axis and time as the horizontal axis. As shown in Fig. 2a, a mobile station is transmitting continuously to a first base station BS1 in a CDMA system in frames 10, 12 whereby 12 represents signalling information and 10 user messages. As shown schematically in Fig. 2c, the first base station BS1 is transmitting continuously to the mobile station in normal frames 30, 32 whereby 32 represents the signalling information and 30 the user messages. In order to provide a time slot within this continuous transmission the base station BS1 compresses its transmission in a special short transmission 34, 36 which frees up a time slot 38 in which the mobile station may monitor another system such as a base station BS2 in a neighbouring system, e.g. a TDMA system. Monitoring may be necessary in preparation for a hand off to the second base station BS2. The compression of the transmission in the frame 34, 36 may be achieved at the expense of worsening the processing gain. To compensate for this loss the transmitting power may be increased, e.g. if the frame is compressed to half its length, the power may be increased to twice its usual level.

As shown schematically in Fig. 2a the mobile station also has compressed mode operation with a shortened CDMA frame 14, 16. The compression provides the mobile station with a transmission slot 18,20 (Fig. 2b) in which it can complete the handover to the second base station BS2. The second base station BS2 communicates in the same slot to the mobile station as shown schematically in Fig. 2d. After the handover is complete the mobile station transmits in normal frames 22, 24 and base station 2 transmits to the mobile station in normal frames 38, 40. An adaption of this technique is known from GB 2 297 460.

The above "compressed mode" operation may involve compression of a 10 millisecond CDMA frame into a shortened frame or signal burst of approximately 5 milliseconds. One way of achieving this is to reduce the symbol length while maintaining the chip rate used to spread the signal at the same level. The effect is that the spreading factor provided by modulation at the chip rate is reduced by a factor of 2. In order to compensate for any deterioration in transmission performance, the transmission power may be increased, e.g. doubled as shown schematically in Fig. 2 for the shortened frames 34, 36, 14, 16, 26, 28. This known system has a significant disadvantage when many of the mobile stations are in the "compressed mode". Under these circumstances there is a high probability that high power transmissions from the base stations or the mobile stations within one cell or within neighbouring cells may coincide so that there is increased interference to other users either in the same system or in neighbouring systems.

It is an object of the present invention to provide a mobile telecommunication system in which a large number of mobile stations within any one cell may be provided with time slots in which each mobile terminal is able to carry out alternative tasks than transmit or receive.

It is an object of the present invention to provide a mobile telecommunication system having a "compressed mode" in which interference within the system and to other systems is reduced.

It is a further object of the present invention to provide a mobile telecommunication system in which mobile terminals having low battery power are able to terminate their current communication adequately.

### SUMMARY OF THE INVENTION

The present invention includes a telecommunications system which supports compressed mode operation, comprising: one or more base station transmitters for transmitting signals to a plurality of remote receivers; means for interrupting transmissions from the one or more base stations transmitters to the plurality of remote receivers and for temporarily increasing the power of transmissions associated with these interruptions in accordance with compressed mode operation; and means for allocating the timings of interruptions of transmissions to the plurality of remote receivers to optimise interference caused by the associated increased power transmissions.

The present invention may include a method of operating a telecommunications system which supports compressed mode operation and which includes one or more base station transmitters transmitting signals to a plurality of remote receivers, comprising the steps of: interrupting transmissions from the one or more base station transmitters to the plurality of remote receivers and temporarily increasing the power of transmissions associated with these interruptions in accordance with compressed mode operation; and allocating the interruptions of transmissions to the remote receivers so as to optimise interference caused by the associated increased power transmissions.

The present invention may also include a base station transmitter for transmitting signals to a plurality of remote receivers which supports compressed mode operation, comprising: means for interrupting transmissions from the base station transmitter to the plurality of remote transceivers and for temporarily increasing the power of transmissions associated with these interruptions in accordance with compressed mode operation; and means for allocating the timings of interruptions of transmissions to the remote receivers to optimise the interference caused by the associated increased power transmissions.

The present invention may also include a method of operating a base station transmitter which supports compressed mode operation and which transmits signals to a plurality of remote receivers, comprising the steps of interrupting transmissions to the plurality of remote receivers and temporarily increasing the power of transmissions associated with these interruptions in accordance with compressed mode operation; and allocating the timings of the interruptions of transmissions to the remote receivers to optimise the interference caused by the associated increased power transmissions.

In the above the optimisation may be performed by distributing the timings of interrupted operation for a plurality of mobile units as evenly as possible in time.

The present invention also includes the use of compressed mode operation in a mobile radio telecommunications network to save battery power of one or more mobile terminals.

The dependent claims define further individual embodiments of the present invention. The present invention will now be described with reference to the following drawings.

### BRIEF DESCRIPTION OF THE FIGURES

Fig. 1 shows schematically various types of access schemes commonly used in radio telecommunications systems.
Figs. 2A to D are schematic representations of conventional compressed mode operation.
Fig. 3 is schematic representation of a mobile radio telecommunications system in accordance with one embodiment of the present invention.
Fig. 4 is schematic representation of a transceiver in accordance with an embodiment of the present invention.
Figs. 5A and B are representations of frames with punctured slots in accordance with an embodiment of the present invention.
Fig. 6 is schematic representation of a mobile radio telecommunications system in accordance with a further embodiment of the present invention.
Fig. 7 is a diagram for illustrating the allocation of timings for compressed mode operation based on dynamically variable thresholds.
Fig. 8 is a flow diagram describing a compressed mode allocation procedure according to an embodiment of the present invention.

### DESCRIPTION OF THE ILLUSTRATIVE EMBODIMENTS

The present invention will be described with reference to certain embodiments and to certain figures but the present invention is not limited thereto but only by the claims. In particular, the present invention will mainly be described with respect to a CDMA mobile telecommunications system but the present invention is not limited thereto and may find general application in mobile telecommunications systems of all types, including, but not limited to, CDMA/FDMA, CDMA/TDMA, CDMA/FDMA/TDMA, FDMA, FDMA/TDMA. In particular, for example, the present invention may be used in and includes a fixed (non-mobile) radio, an optical or a wireline telecommunications systems.

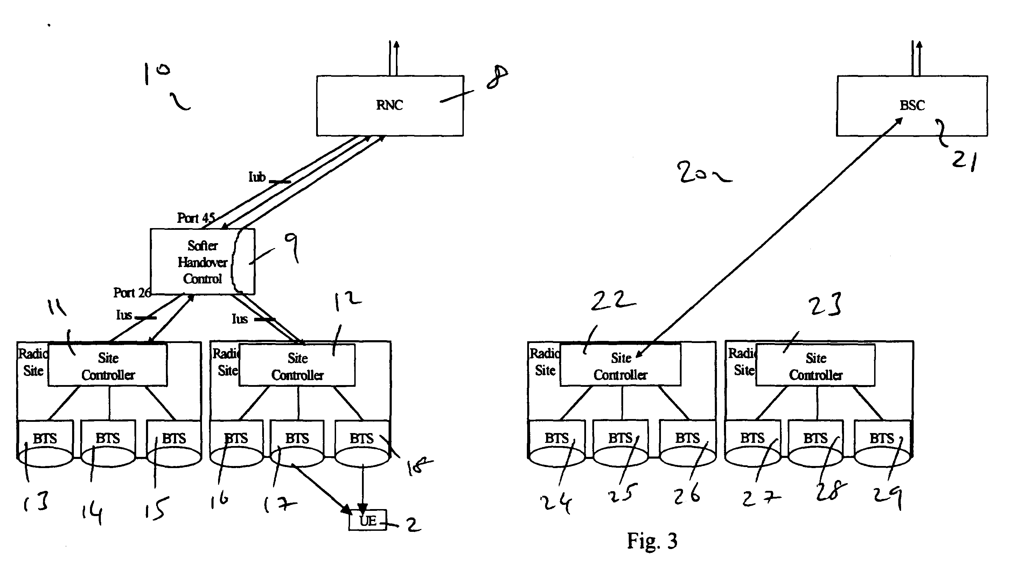

A first embodiment of the present invention will be described with reference to Fig. 3 and includes a mobile telecommunications network 10 in which mobile a terminal 2 may communicate with one or more base stations 13 to 18 simultaneously via radio links on a radio air interface. As an example, the communication system 10 may use a spread spectrum access method for the mobile terminals 2, e.g. a CDMA, an FDMA/CDMA, a TDMA/CDMA, or an FDMA/TDMA/CDMA system or similar, in particular, any system using direct sequence spread spectrum techniques. Typically, each base station 13-18 will transmit a beacon or pilot signal which can be processed by any mobile terminal 2. In an exemplary CDMA system, each base station 13-18 transmits a pilot signal having a common PN spreading code that is offset in code phase from the pilot signal of other base stations. During system operation, a mobile terminal 2 is provided with a list of code phase offsets corresponding to neighbouring base stations 13-16, 18 surrounding the base station 17 through which a communication is currently established. The mobile unit 2 is equipped with a searching element that allows the mobile unit 2 to track the signal strength of the pilot signal from a group of base stations 13-18 including the neighbouring base stations. The pilot signal will be typically used by a mobile terminal 2 for initial synchronisation.

Each group of base stations 13 -15; 16-18 may be controlled by a site controller 11; 12. Each triplet of base stations 13-15; 16-18 may serve the three sectors of one radio site. Each site controller 11, 12 communicates with a network controller RNC 8 which in turn may be connected to other RNC's and other switches within the network as well as to other networks such as a pubic telephone network (PSTN). The protocols used for communicating between the RNC 8, the site controllers 11, 12 and other switches in the networks are not considered to be a limitation on the present invention and may be, for example, an IP, and IP/TCP, an ATM protocol or any other suitable protocol. A softer handover controller (SHC) 9 which is associated with one or more site controllers 11, 12 may be provided for combining signals from several base stations 13-18 to improve overall reception.

Close to, or overlaid on system 100, there may be sources of radio interference such as microwave transmitters or other mobile telecommunications systems. In particular, there may be close to, or overlaid on system 10, a mobile telecommunications system 20 which makes use of a different frequency band than has been allocated to the system 10. There may be several reasons why mobile terminal 2 may wish to monitor the frequencies of other radio sources. Firstly, the mobile terminal 2 may communicate information about other frequency bands so that the network 10 can decide to change the frequency of operation with mobile terminal 2, for example, to improve reception by selecting a frequency band with less radio noise. Secondly, the mobile terminal may need to hand-over to another base station 24-29 which is part of another mobile telecommunications system such as 20 operating on another frequency band or to another base station which is part of the same system 10 but transmits and receives or prefers to transmit and receive on a different frequency band.

To provide the mobile terminal with time for monitoring other frequencies and for setting up handovers with base stations operating at other frequencies and for allowing the mobile terminal 2 time to carry out other tasks, the base stations 13 to 18 of system 10 may operate in "compressed mode" as is known in principle from the article by Alfred Baier et al. and GB 2 287 460 mentioned above both of which are incorporated herein by reference. In compressed mode the currently communicating base station 17 provides one or more slots of transmission silence within normal transmission frames. The compression of the transmission to provide the slots may be achieved by any suitable method, e.g. those mentioned in the article by Baler et al. and in GB 2 287 460 or, for instance, by puncturing the signal to reduce the number of bits transmitted or by changing the forward error coding rate. Whatever method is used, it is preferably to compensate for any loss in reception quality by increasing the transmission power as has been generally described with reference to Fig. 2.

There may be more than one reason for requiring a compressed operation mode as described above. Firstly, the mobile terminal 2 may monitor other frequencies during the time slot provided by the compressed mode. Secondly, the mobile terminal 2 may use the slots provided to save battery power by switching off its receiver during the slots. This may be used in accordance with an embodiment of the present invention to save battery power when the battery is low. If the mobile terminal 2 senses that its battery is low and that a current communication may be terminated abruptly if nothing is done, the mobile terminal 2 may transmit a signal over signalling or traffic channels to the current base station 17 including a request for the base station to enter repetitive compressed mode. The base station 17 then enters compressed mode and provides a series of slots in the sequence of following transmission frames. The mobile terminal 2 switches off its receiver during the slots thus saving power in the hope that the communication may be maintained until the user (who may be informed of a low battery by other means) has had time to make arrangements with the called party with respect to the impending loss of the communication.

Another reason why a mobile terminal may require compressed mode is to receive services from other radio sources including other mobile telecommunications networks. For instance, a telecommunications system such as the European GSM system may provide cell broadcasted information, e.g. weather reports, traffic information, important news items, local information including details of restaurants, public utilities and shopping centres in the area, or similar useful information. Other radio sources may provide similar information, in particular, large shopping areas may have micro-radio telecommunications systems providing useful information. The mobile terminal 2 may wish to receive these communications, which are normally sent on a common signalling channel, in the time slots provided by compressed mode operation. In addition the mobile terminal 2 may be a dual mode terminal which operates with the overlaid system 10 and a local "home base station" at the home of the user of terminal 2. To obtain access to the home base station and to transfer calls thereto, the mobile terminal 2 may use the slots of the compressed mode to contact and log-on to the home base station.

Hence, in accordance with the present invention, a compressed mode operation which generates free time slots for a mobile terminal to carry out other activities or to save battery power may be provided at variable times and variable rates. In particular, the present invention foresees and provides increased use of the compressed mode to provide additional services to mobile terminals.

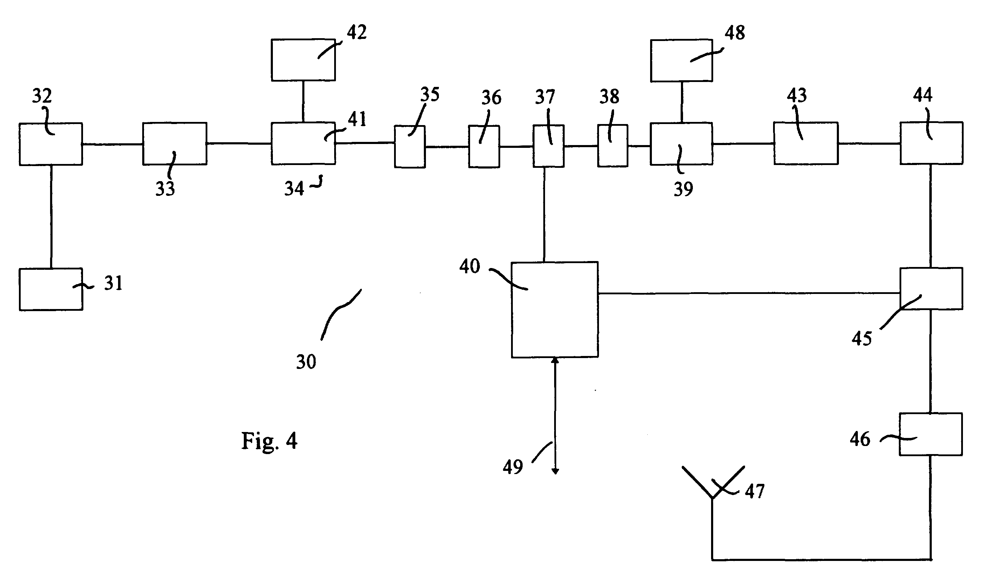

A transceiver 30 in accordance with one embodiment of the present invention is shown schematically in Fig. 4 which will be described with reference to a base station transceiver but the same principles as are described below may also be applied to a mobile radio transceiver. The base station transceiver 30 may optionally use conventional punctured convolutional coding and may include a coder 32-34 for coding a digital input to be transmitted. Any conventional coding scheme may be used which allows puncturing, for example, conventional convolutional coding or turbo coding as described in the article by V. Berrou, A. Glavieux, P. Thitimajshima, entitled 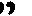 Near Shannon limit error-correcting coding and decoding: Turbo codes (1)" Proceedings of the IEEE Int. Conf on Communications (ICC'93), pages 1064-1070. Modulation, convolutional coding, puncturing of the convoluted code and interleaving are not considered to be a limitation on the present invention and will not be described in detail. The coder 32-34 includes a convolutional coding circuit 33 and a puncturing circuit 34 which receive the digital input from a data source 31 and output a punctured convolutional coded output. Optionally, the data from the data source 31 may first be coded in an error detection encoder 32 which may encode the data with a conventional error detection code, e.g. a cyclic redundancy code. The data source 31 may include any suitable digital data, e.g. digital data from a personal computer, fax transmissions, vocoded speech data. The digital input is coded by the convolutional coding circuit 33 so that for every k-bits inputted into the coding circuit 62, a corresponding n-bits, where n>k, is outputted. The k-bits inputted and the corresponding n-bits outputted are referred to as k-tuples and n-tuples, respectively. A convolutional coding rate for the convolutional coding circuit 33 is defined as the ratio of the number of k-bits inputted to the number of n-bits outputted, and can be expressed as k/n. For example, the coding rate is 1/2 when for each bit inputted into the convolutional coding circuit 33 there is a corresponding two bits outputted.

In order to increase the code rate of the coder 32-34, the convolutional coded output is passed through a puncturing circuit 34 which includes a transmission mask circuit 41 and deleting pattern memory 42 for transmitting only selected bits of the convolutionally coded output. The puncturing circuit 34 outputs a punctured output having a punctured code rate of z/q, i.e. for every z bits input to the conventional coding circuit 62, q bits are output from the puncturing circuit 34.

The desired punctured code rate is achieved by passing a convolutional coded output through the transmission mask circuit 41 and puncturing the convolutional coded output on a packet-by-packet basis. Each packet to be punctured is formed from a plurality of n-tuples and is called a puncturing packet.

The puncturing packets are punctured according to a deleting pattern which has a length equal to that of a puncturing block. The deleting pattern may be stored in the memory 42 as a puncturing matrix. The bits of the puncturing matrix have a one-to-one correspondence with the bits in each of the puncturing packets. The deleting pattern chosen has the minimum bit length necessary to achieve the desired punctured code rate of z/q for a convolutional coding rate of k/n.

The deleting pattern used by the puncturing circuit 34 is an L-length block of ones and zeros, with each one representing a transmission bit and each zero representing a non-transmission bit. (The transmission bits and non-transmission bits are also referred to as non-deleting bits and deleting bits, respectively). The ratio of ones to zeros in the L-length deleting pattern is chosen to achieve the desired punctured code rate. It is the ratio of ones to zeros in the deleting pattern that determines the punctured code rate.

The punctured convoluted code is then optionally processed by an interleaver 35. Interleaving is a process by which the bits from different convoluted punctured blocks are mixed in accordance with strict rules so that bits close to each other in the transmitted signal are spread over several blocks. The output of the interleaver 35 is a succession of blocks. These blocks are then fed to a frame processor 36 in which the blocks are organized into frames. Within each frame a level of redundancy is provided, e.g. each block may be transmitted three times if the redundancy ratio is three. The frames are now passed to a frame puncturing circuit 37. Frame puncturing circuit 37 is under the control of a central processing unit (CPU) 40. The puncturing circuit 37 punctures a slot in the particular frame at a particular position in the frame and for a particular length of time as determined by the CPU 40 only when a compressed mode operation is required.

To transmit the punctured or non-punctured frames the output of the frame puncturing circuit 37 is modulated in a modulator 38 which modulates the packets with a base band signal. The modulation may be analog or digital and for instance may be digital in which case the digital signal is convened to an analog signal in a D/A convener 43 and up-convened in an upconverter 44 which is then amplified in an amplifier 45 which is under the control of the CPU 40. In each frame into which a slot has been punctured by frame puncturing circuit 37, the transmitted power is increased by an appropriate ratio to compensate for the loss of redundancy caused by the frame puncturing. The frames are then filtered in band pass filter 46 to remove extraneous frequencies, and transmitted from antenna 47. To spread the signal a spreading operator 39 may modulate the punctured frames with a PN-code from a PN-code generator 48. It is considered that the method of spreading the signal is not a limitation on the present invention. In the mobile terminal the reverse process is carried out to recover the original data. The mobile terminal will not be described in detail.

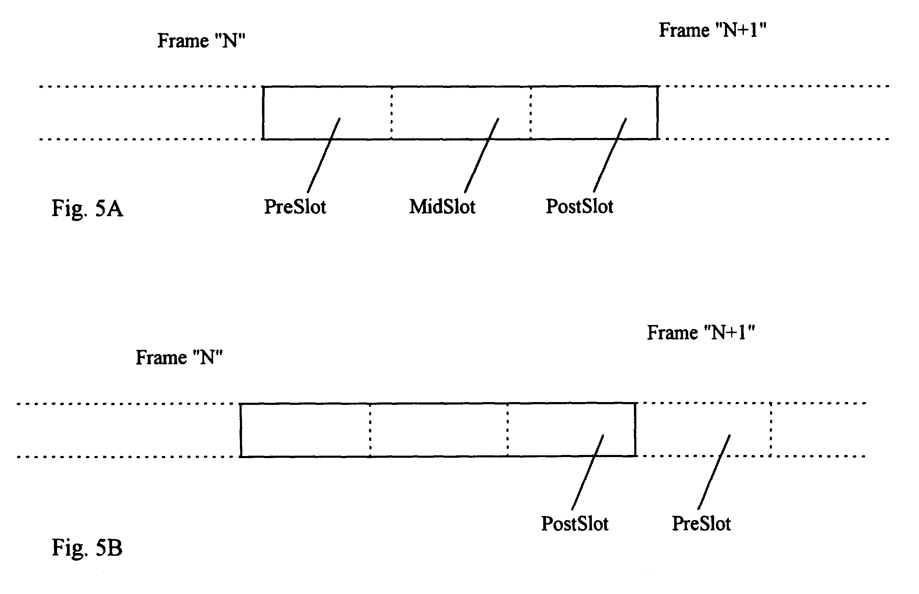

In accordance with the present invention base station 17 may be communicating with a plurality of mobile terminals 2 in compressed mode. In order to reduce the interference effect caused by the punctured frames transmitted with increased power to these plurality of mobile terminals 2, the CPU 40 controls the operation of the frame puncturing circuit 37 in such a way that the timing of the punctured frames and optionally the position of the slots in these punctured frames are chosen optimally. This means that the network preferably selects the position and timing of the punctured slots so that interference to users is a minimum. For instance, the punctured frames may be distributed in time so that within one cell or radio coverage area, increased power transmissions in two punctured frames never occur at the same time. An example of this time distribution of punctured slots will be described with reference to Fig. 5. Fig. 5A is a schematic representation of a frame having a frame number "N" transmitted in system 10 by base station 17 to mobile terminal 2. In this frame N, the frame puncturing circuit 37 may puncture a slot which has a shorter duration than the frame duration. For instance, the punctured slot may be one third of the length of the frame. The punctured slot may be located at the beginning of the frame in which case a "PreSlot" is formed, i.e. the period of no transmission when the mobile terminal 2 may carry out other duties or switch off the receiver is at the beginning of the frame. In this case the increased power transmission will take place in the remaining two thirds of the frame. Alternatively, the punctured slot may be located in the middle of the frame (a MidSlot) in which case the increased power transmissions will occur in the first and last thirds of the frame. Finally, the punctured slot may be located at the end of a frame (a PostSlot). Assume that the interleaving depth is five frames. Provided only one slot is punctured in every five frames the interleaving combined with forward error coding will normally be able to compensate for any loss of data caused by the punctured slot which is not compensated for by the increase of power. In accordance with the present invention the position of the punctured frames transmitted by a base station 17 is controlled by the network, hence, compressed mode can only be initiated by the network. This initiation may be preceded by a request from a mobile terminal 2 for compressed mode. Once a base station 17 receives a compressed mode request, the CPU 40 determines the frame and the position in the frame for each punctured slot. For example, punctured frames are transmitted to the first mobile terminal at frame numbers N, N+5, N+10, ....N + 5m, where m is an integer. The slot position may be PostSlot in these frames. Punctured frame transmissions to the next mobile terminal which requests compressed mode may be provided as a punctured PostSlot in frames N+1, N+6, N+11, ...... N+1+5m. This process is repeated for each new mobile terminal requesting compressed mode. For the sixth requesting mobile terminal, the frame N, N+5, N+10.... N+5m may be allocated with the slot position PreSlot. For the seventh terminal, PreSlot in the frames N+1, N+6, N+11, ...... N+1+5m may be provided. For the eleventh mobile terminal the frame N, N+5..... N+5m. may be allocated with the punctured slot position MidSlot. For the twelfth terminal a punctured MidSlot may be provided in frames N+1, N+6, N+11, ...... N+1+5m, and so on. Hence, with this simple algorithm 15 mobile terminals may be served with compressed mode simultaneously while distributing the increased power transmissions relatively evenly in time. If a longer slot is required, a PreSlot and a Post Slot from adjacent frames may be used (Fig. 5B).

In accordance with a modification of this embodiment, the selection of the best position and timing of the next punctured slot is determined based on the look ahead power/time profile of existing transmissions. Within a CDMA network a base station transmits at different powers depending upon many factors, e.g. the reception conditions of the receiving mobile terminal, for instance, where the mobile terminal is far away the transmit power from the base station will probably be increased, or in case several different data rates are used which may have different tolerances to errors, e.g. in multi-media environments with video, fax, voice, low priority data, or the processing gain available with these data rates may be different, hence requiring, in both cases, different transmit powers to maintain acceptable error levels. Thus under normal conditions the power transmitted from a base station in any frequency range varies with time and provided the traffic is not varying too rapidly, the base station knows several frames in advance which power will be required for each future frame. In accordance with this modification of the present embodiment the base station does not transmit slavishly in dependence on an algorithm of the kind described above. Instead, the base station CPU 40 is provided with sufficient local intelligence to select the most appropriate frame and position in the frame to provide a punctured slot for a mobile terminal which keeps interference within the system limits. In making the decision about when and in what position in the frame the slot should be placed, the CPU 40 may take into consideration future changes with time of instantaneous power at any transmit frequency as calculated from the power planed to be used by the base station for these transmissions. The CPU 40 may then attempt to a select time for the placement of a punctured slot when the increase in power of the transmissions in the same frame as the punctured slot has the least interfering effect. For example, the CPU 40 may determine for a certain number of frames in advance the planned power of all transmissions at a certain frequency or in a certain frequency band. These planned power transmissions of a certain number of frames will be called the future power/time transmission characteristic. The CPU 40 may then determine a minimum in this power/time transmission characteristic in order to place the increased power transmissions of a punctured frame. Selecting a minimum may still cause too much interference if the new increased power transmissions associated with the new punctured slot are excessive. Hence, in accordance with a modification of this embodiment, the CPU 40 determines not only the minimum of the power/time characteristic but also checks whether the transmit power level at the selected point lies below a certain threshold. This threshold may depend on the traffic density for the particular base station. This determination may also include determining a maximum allowed transmitted power. For example, let us assume that the increased power transmission associated with a new request for compressed mode will be doubled from 3 to 6 arbitrary power units and the maximum allowed transmit power is 10 power units. The CPU 40 will first examine the planned transmission frames of the requesting mobile and try and select one of the planned frames for this mobile for the compressed mode. For this it determines the total power level of all planned transmissions within the frequency band which are to be transmitted during the planned frames of the requesting mobile. CPU 40 seeks a frame in which the total power of all transmissions is a minimum. The CPU 40 allocates a punctured slot in such a minimum power frame if the additional 3 power units may be accommodated while keeping the total transmit power within the allowed maximum, i.e. allocation will occur at timing with an existing total power level of less than 7 power units. If this procedure fails the CPU may seek timings to which the transmissions of the requesting mobile can be moved, e.g. other frames, for instance in another frequency band. In this case the CPU 40 must seek timings which can accommodate the full 6 power units, i.e. the threshold is 10-6 = 4 power units. The search for a timing for the 3 extra power units in the frequency band of the planned transmit frames of the requesting mobile and the search for a timing to which the 6 power unit transmission can be moved may be carried out at the same time in CPU 40 by multi-tasking.

In accordance with a further modification of this embodiment CPU 40 does not determine a minimum but merely seeks a time in future frames at which the planned total transmit power is below the threshold which is allowed for the level of increased power associated with the new compressed mode operation. Hence, to use the above example, CPU 40 seeks any position in the frequency band of the planned transmit frames of the requesting mobile at which the planned total transmit power drops below 7 power units independent of whether it is a minimum or not. Alternatively, CPU 40 seeks a timing at which the total power level in the frequency band is less than 4 units to which the transmissions of the requesting mobile can be moved independently of whether it is a minimum. In a further modification the CPU 40 need not work with a constant maximum allowed transmit power but may use a dynamically variable maximum allowed transmit power. For instance, the running average of the total transmit power in a certain frequency band over a certain number of frames may be used as an indication of the maximum power allowed. For instance, let us assume that over the last 10 frames the transmitted power has an average of 9 power units. This average may then be multiplied by a factor which may be unity or greater or smaller than one to generate a maximum reference power level. Assuming the factor is 1 and the increased power level associated with the new compressed mode operation is from 3 to 6 power units, i.e. 3 additional power units, the CPU 40 will look for a time in the frequency band of the planned transmit frames of the requesting mobile at which the transmit power is less than 6 units, i.e. 9 minus 3 units. Alternatively, if the transmit frames of the mobile have to be moved the CPU 40 searches for a timing with a power level of less than 3 units, i.e. 9 - 6, in frames to which the planned frames of the requesting mobile may be moved. These procedures will place the new compressed mode operations at points of low total transmitted power within a certain frequency band which will increase the average power as time goes on. A limit may be set to this process by fixing a maximum average transmit power and/or a maximum absolute power at any time. At low levels of activity the average power will be very low and if the average power is used as a limit for allocation this may prevent any allocation of compressed mode operation. To avoid this problem a minimum average may be set, i.e. if the calculated average is below a certain pre-determined lower level, the pre-determined lower level is taken as the average and not the calculated average.

More complex algorithms are included within the scope of the present invention to select the best timing for the placement of a new compressed mode operation. For instance, the interference affect of any transmission depends upon its spreading factor. When the spreading factor is high, the resulting transmitted signal will appear more like white noise and cause less interference than a transmission with a lower spreading factor. Hence, the spreading factor may also be included as one of the parameters used in determining whether a new compressed mode operation may be initiated at a certain time point within existing transmissions. Generally it may be stated that the present invention may provide methods and apparatus for determining the allocation timing of a down-link compressed mode operation which minimizes or keeps at a low level the interference effect of such a new operation on existing transmissions. Selecting the timing of a new compressed mode operation such as to keep the interference effect of the increased power transmissions thereof low or to minimize it will be described as selecting the timing to optimize the effect on interference in accordance with the present invention.

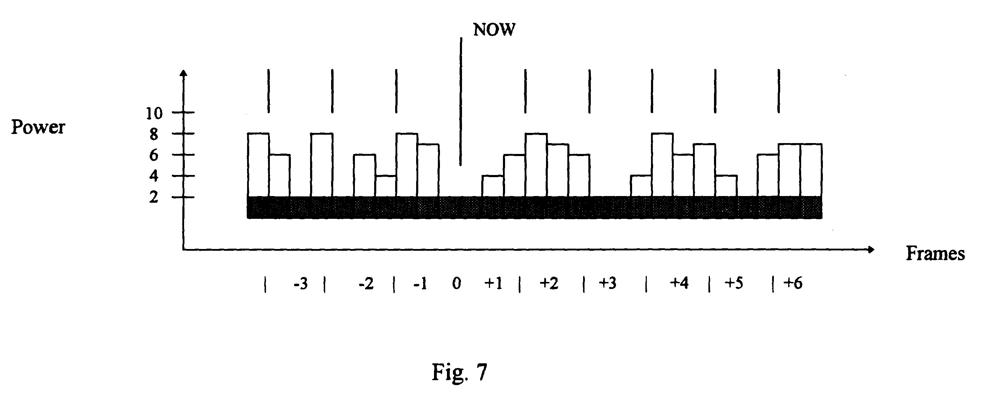

The above methods can be illustrated with reference to Fig. 7 which shows the total power level of all transmissions to mobile terminals against frame number in a particular transmit frequency band for an arbitrary base station. The frame number is determined with reference to the present time (= NOW). Each frame is subdivided into three parts or timing slots, a PreSlot, a MidSlot and a PostSlot as described above. A punctured slot may be introduced at any of these timing slots. The average total transmit power over the last 3 frames is 5.2 units and the scaling factor will be assumed to be 1, i.e. the maximum power reference level is 5.2 power units. All the frames to all the mobile terminals are synchronized. The CPU 40 first checks if the average total power level is above the minimum level. Let us assume that it is. The previous and the planned transmissions from the base station to a mobile terminal are shown shaded and have a power level of 2. It is assumed that this mobile terminal has requested compressed mode operation. As the system is CDMA the transmissions to the mobile terminal are continuous. The increase in power for compressed mode will be assumed to be 2 units (doubled). To allocate a timing for compressed mode, the CPU 40 first seeks a power level of less than or equal to 5.2-2 = 3.2. units in the power/time characteristic of all the transmissions in the frequency band which includes the planned transmit frames for the mobile. Frame 1, PreSlot; frame 3, PreSlot and MidSlot and frame 5, MidSlot are such frames. In fact these timing slots in these frames are not only below the threshold of 3.2 units but are also minimums for the mobile transmissions in the first 5 frames from "NOW". Thus, independent of whether the CPU 40 is seeking a minimum power timing among the frames or merely a timing in a frame with a total power level below the threshold, one of the frames 1, 2, 3 or 5 would be selected for compressed mode operation. Frame 3 has low power in the PreSlot and MidSlot positions. This means that the PostSlot of frame 3 is selected for puncturing. This will cause increased power operation in the Pre- and MidSlot transmissions of this frame. As at both these positions the total power level of all transmissions lies below the threshold of 3.2 units, the selection of this frame meets all requirements. On the other hand, the CPU 40 cannot move an existing transmission requiring 4 power units total into any of the frames as shown. This would require a frame with a timing slot having an existing power level of 5.2-4 = 1.1. There is no such frame in the next 5 frames from NOW.

If compressed mode cannot be initiated in accordance with any of the above allocation procedures, the base station may wait for a pe not move an existing transmission requiring 4 power units total into any of the frames as shown. This would require a frame with a timing slot having an existing power level of 5.2-4 = 1.1. There is no such frame in the next 5 frames from NOW.

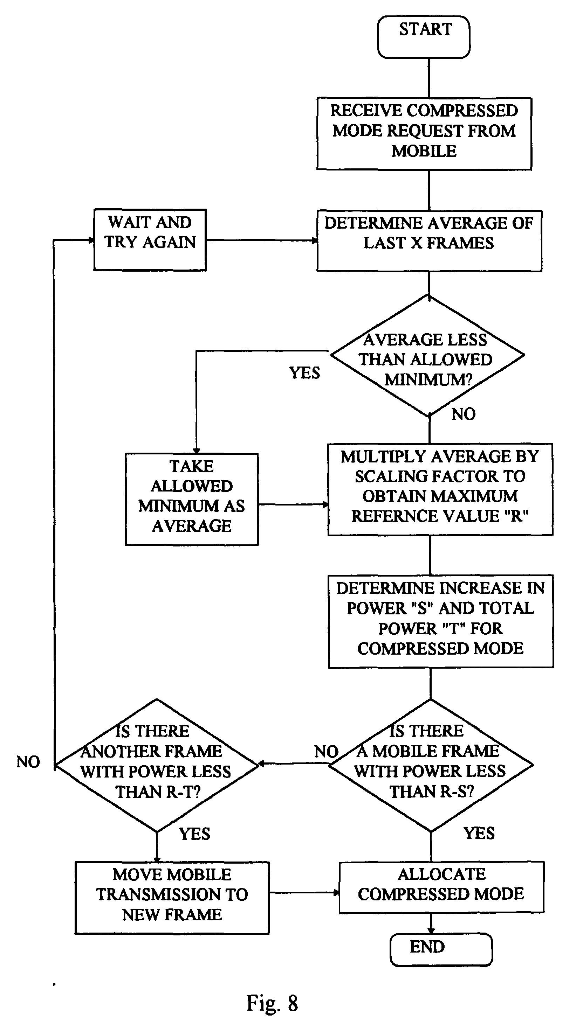

If compressed mode cannot be initiated in accordance with any of the above allocation procedures, the base station may wait for a period of time and retry or alternatively, the maximum allowed instantaneous power level may be increased. For instance, the maximum allowed power for any frame may be increased for a certain period of time. If the total power after a certain number of frames has reduced to within the allowed maximum compressed mode is continued. If the power level is still too high compressed mode may be terminated. This procedure allows for a short emergency operation of compressed mode. Alternatively, other parameters of the transmissions may be changed, e.g. the CPU 40 may try a different frequency or frequency band, change the processing gain/spreading factor to reduce interference, etc. A flow diagram of the procedure is shown in Fig. 8.

The request from the mobile terminal 2 for compressed mode operation may include information relating to the best timing of the slots in the punctured frames. For instance, when the mobile terminal wishes to handover to an alternative system 20, details of the frame timing of the alternative system may be transmitted to the base station 17 from the mobile terminal 2 either with the request for compressed mode or in subsequent signaling messages. The CPU 40 then has to arrange the punctured frames for the requesting mobile so that the required timings are achieved which may require moving the punctured frames for other mobiles to other positions within the frame or to a different sequence of frames. Accordingly, in accordance with the present invention, not only may the compressed mode operation for a requesting mobile be allocated at a timing which reduces the interference effect of the increased power transmissions but also includes creating specific low power frames by re-arranging the timings of other mobile transmissions. To achieve this pro-active allocation of compressed mode timings in accordance with the present invention, the base station may communicate the positions and timings of punctured frames to the respective mobile terminals over normal signaling channels or over traffic channels on a dynamically variable basis.

One disadvantage with the first embodiment of the present invention may occur when a mobile terminal 2 is in a soft-handover situation, e.g. is communicating simultaneously with two base stations 17, 18 (see Fig. 3). In this case there may be no co-ordination and/or synchronization between the two base stations 17, 18 so that on receipt of the request for compressed mode the two base stations 17, 18 assign different times for the punctured frames. To avoid this problem, the compressed mode operation mentioned above in accordance with the first embodiment may be optionally restricted to those mobile terminals which are not in a soft handover situation.

A second embodiment of the present invention will now be described. As shown schematically in Fig. 3 two or more base stations 17, 18 are communicating simultaneously with mobile terminal 2 in a soft handover situation, they are therefore in the Active set of mobile terminal 2. An Active Set is the set of base stations through which active communication is established. The Neighbour Set is a set of base stations surrounding an active base station comprising base stations that have a high probability of having a pilot or beacon signal strength of sufficient level to support communication of adequate quality. The Candidate Set is a set of base stations having a pilot or beacon signal strength of sufficient level to establish communication.

When communications are initially established, a mobile terminal 2 communicates through a first base station 17 and the Active Set contains only the first base station 17. The mobile terminal 2 monitors the pilot or beacon signal strength of the base stations surrounding it and each of these is allocated to the Active Set, the Candidate Set, or the Neighbour Set. When a pilot or beacon signal of a base station 18 in the Neighbour Set exceeds a predetermined threshold level, the base station 18 is added to the Candidate Set and removed from the Neighbour Set of the mobile terminal 2. The mobile terminal 2 communicates a message to the original base station identifying the new base station 18. A cellular system controller such as RNC 8 decides whether to establish communication between the new base station 18 and the mobile terminal 2. Should the controller 8 decide to do so, it sends a message to the new base station 18 with identifying information about the mobile terminal 2 and a command to establish communications therewith. A message is also transmitted to the mobile terminal 2 through the original base station 17. The message identifies a new Active Set that includes the original and the new base stations 17, 18. The mobile terminal 2 searches for the new base station transmitted information signal and communication is established with the new base station 18 without termination of communication through the original base station 17. This process can continue with additional base stations.

When the mobile 2 sends a request for compressed mode operation it will be received by the two base stations 17, 18 each of which has a CPU 40 (Fig. 4). The CPU's 40 in the two base stations 17, 18 may allocate different positions for the punctured frames thus causing increased interference or reception difficulties at the mobile terminal 2. Hence, in accordance with the second embodiment the CPU 40 of each base station 17, 18 is under control by the site controller 12 and/or the RNC 8 via the line 49 (see Fig. 4). All the different methods of optimising the determination of the timing of a punctured slot mentioned above with reference to the CPU 40 may be carried out by the site controller 12 and/or the RNC 8 and communicated to the CPU's of the base stations 17, 18. In the case when more than one base station is transmitting to one mobile terminal the RNC 8 and/or the site controller 12 preferably looks at the planned power/time characteristic of each base station 17, 18 separately and only allocates compressed mode when the maximum power level requirements are satisfied for each base station 17, 18. The site controller 12 and/or the RNC 8 co-ordinate(s) the initiation of a compressed mode operation so that all the base stations 17, 18 involved with current communications to one mobile terminal 2 transmit punctured frames at the same time, with the punctured slot in the same position within the frame and the increased power transmissions are within the allowed maximum power thresholds. In accordance with this embodiment the timings of frames in all relevant radio coverage areas or cells of system 10 must be synchronised.

A mobile terminal 2 may also communicate simultaneously in soft handover with two base stations such as base stations 15 and 17 which are served by different site controllers 11, 12. In this situation it is preferred if the introduction and timing co-ordination of compressed mode operation is done by the RNC 8. Still further, as shown schematically in Fig. 6 a mobile terminal 2 may be communicating simultaneously in soft handover with two base stations 18, 55 which are served by different RNC's 8, 51. In accordance with a third embodiment of the present invention one node of the network 10 is designated as an anchor node during all handovers and remains as the anchor node of the communication path both before and after the (soft) handover. Typically, one type of node, for example, an RNC 8 will be assigned the duties of the anchor node for handovers. Whichever network element is chosen for this role, it is preferable if each such element can communicate with each other element within the network. For instance, as shown in Fig. 6, the anchor node may be the anchor RNC 8. Let us assume that the mobile terminal 2 is currently in communication with base stations 17, 18 and has decided to create a new radio link to base station 55 while keeping the existing communication links (soft handover). The RNC 8 being the anchor RNC sets up a communication between itself and the RNC 51 (a drift RNC) along a communication path 61 which directly connects the two RNC's 8, 51 while maintaining the existing communications to base stations 17, 18. The new link is then set up with the target base station 55 using the existing communications path up to the anchor RNC 8 and then a new path via the RNC 51, soft handover controller 52, site controller 53 to the target base station 55. The RNC 51 also takes over the compressed mode timings from the anchor RNC 8, i.e. RNC 51 acts as a slave node of RNC 8 as far as the timings of punctured frames are concerned which are transmitted to mobile terminal 2.

While the invention has been shown and described with reference to preferred embodiments, it will be understood by those skilled in the art that various changes or modifications in form and detail may be made without departing from the scope and spirit of this invention as defined in the attached claims. For instance, in the above a regular puncturing of a sequence of frames has been described but the present invention also includes other schemes of puncturing the frames, e.g. randomly or other more complex puncturing algorithms. In the above description the instantaneous power of transmissions used to select the optimum position and timing of punctured slots has been described as being calculated, however, the present invention also includes the use of a separate measuring receiver in each cell or associated with each transceiver in order to measure the power profile. Further, the principles described above may also be applied to the operation of the mobile terminals as well as to base station transceivers.

## Claims

1. A telecommunications system which supports compressed mode operation, comprising:
one or more base station transmitters for transmitting signals to a plurality of remote receivers;
means for interrupting transmissions from the one or more base stations transmitters to the plurality of remote receivers and for temporarily increasing the power of transmissions associated with these interruptions in accordance with compressed mode operation; and
means for allocating the timings of interruptions of transmissions to the plurality of remote receivers to optimise interference caused by the increased power transmissions.

2. The system according to claim 1, wherein the allocating means is adapted to distribute the timings substantially evenly in time.

3. The system according to claim 1, wherein the allocating means is adapted to determine the power level/time characteristic of currently planned future transmissions and to select the time for interrupting transmissions based on the power/time characteristic.

4. The system according to claim 3, wherein the allocating means is adapted to select the timing for interrupted transmissions based on finding a minimum in the power level/time characteristic or on a finding a timing at which the planned power level is below a threshold power level within the determined power level/time characteristic.

5. The system according to claim 4, wherein the threshold power level is determined in accordance with a characteristic of the traffic density of transmissions.

6. The system according to any of claims 1 to 5, wherein the system is an FDMA, a TDMA a CDMA system or a combination of these.

7. The system according to any of claims 1 to 6, wherein the system is a radio mobile telecommunications system.

8. The system according to claim 7, wherein the interrupting means is adapted to provide compressed mode operation to remote receivers only when they are not in a soft handover.

9. A method of operating a telecommunications system which supports compressed mode operation and which includes one or more base station transmitters transmitting signals to a plurality of remote receivers, comprising the steps of: interrupting transmissions from the one or more base station transmitters to the plurality of remote receivers and temporarily increasing the power of transmissions associated with these interruptions in accordance with compressed mode operation; and allocating the timings of the interruptions of transmissions to the remote receivers to optimise the interference caused by the increased power transmissions.

10. The method according to claim 9, wherein the allocating step includes distributing the timings substantially evenly in time.

11. The method according to claim 9 or 10, further comprising the step of determining the power level/time characteristic of current transmissions and selecting the time for interrupting transmissions based on the power/time characteristic.

12. The method according to claim 11, wherein the timing for interrupted transmissions is selected based on a minimum in the power level/time characteristic or on a planned power level below a threshold power level within the determined power level/time characteristic.

13. The method of claim 12, wherein the threshold power level is determined dependent upon a characteristic of the traffic density of transmissions.

14. The method according to any of claims 8 or 13, wherein the system is a CDMA mobile radio telecommunications system and compressed mode operation is only provided to remote receivers when they are not in a soft handover.

15. A base station transmitter for transmitting signals to a plurality of remote receivers and which supports compressed mode operation, comprising: means for interrupting transmissions from the base stations transmitter to the plurality of remote receivers and for temporarily increasing the power of transmissions associated with these interruptions in accordance with compressed mode operation; and means for allocating the timings of the interruptions of transmissions to the remote receivers to optimise interference caused by the increased power transmissions.

16. The base station transmitter according to claim 15, wherein the allocating means is adapted to determine the power level/time characteristic of current transmissions and to select the time for interrupting transmissions based on the power/time characteristic.

17. The base station transmitter according to claim 15 or 16, wherein the system is a CDMA radio mobile telecommunications system and the interrupting means is adapted to provide compressed mode operation to remote receivers only when they are not in a soft handover.

18. A method of operating a base station transmitter which supports compressed mode operation and which transmits signals to a plurality of remote receivers, comprising the steps of:
interrupting transmissions to the plurality of remote receivers and temporarily increasing the power of transmissions associated with these interruptions in accordance with compressed mode operation; and
allocating the timings of the interruptions of transmissions to the remote receivers to optimise interference caused by the increased power transmissions.

19. The use of compressed mode operation in a mobile radio telecommunications network to save battery power of one or more mobile terminals.
